Europäisches Patentamt

European Patent Office

Office européen des brevets

(11) Publication number: **0 165 815**
**B1**

## (12) EUROPEAN PATENT SPECIFICATION

(45) Date of publication of patent specification: **17.05.89**

(21) Application number: **85304409.7**

(22) Date of filing: **20.06.85**

(51) Int. Cl.⁴: **B 05 B 15/04,** B 03 C 9/00

(54) Improvements in and relating to a powder recovery apparatus.

(30) Priority: **20.06.84 GB 8415718**

(43) Date of publication of application:
**27.12.85 Bulletin 85/52**

(45) Publication of the grant of the patent:
**17.05.89 Bulletin 89/20**

(84) Designated Contracting States:
**BE CH DE FR IT LI NL SE**

(56) References cited:
CH-A- 529 590
DE-A-2 555 067
DE-A-2 839 540
DE-A-3 028 588
US-A-2 014 287
US-A-4 245 551

(73) Proprietor: **NORDSON CORPORATION**
**555 Jackson Street P. O. Box 151**
**Amherst Ohio 44001 (US)**

(72) Inventor: **Frost, Ivan Ernest**
**25 Cavendish Mews Alderley Road**
**Wilmslow Cheshire, SK9 1PW (GB)**
Inventor: **Ainsworth, James William**
**3 Paddock Rise Beechwood**
**Runcorn Cheshire, WA7 3HL (GB)**

(74) Representative: **Allen, Oliver John Richard et al**
**Lloyd Wise, Tregear & Co. Norman House**
**105-109 Strand**
**London, WC2R 0AE (GB)**

## Description

This invention relates to a powder recovery apparatus, and in particular, to such apparatus which employ a cyclone body according to the preamble of claim 1.

CH-A-529 590 describes a coating powder recovery apparatus comprising a cyclone body to separate coating particles from a suspended form, an intermediary powder storage chamber positioned beneath the cyclone body and a coating powder sieve device to separate out reusabe coating powder, the powder sieve device being positioned to the side of the cyclone body. However, no provision is made to permit rapid and simpe powder colour changes DE-A-2 555 067 also describes a powder recovery apparatus with a cyclone body. However, in order to change the powder colour, the cyclone body has to be replaced.

The object of this invention is to allow rapid powder colour changes without having to replace the cyclone body.

In accordance with the invention a coating powder recovery apparatus comprises a cyclone body to separate coating particles from a suspended form, an intermediary powder storage chamber positioned beneath the cyclone body and a coating powder sieve device to separate out reusable coating powder, the sieve device being positioned to the side of the cyclone body and a transfer hose to feed the powder from the intermediary chamber to the powder sieve device characterised in that the intermediary powder storage chamber is detachably secured to the cyclone body.

Such an arrangement enables the apparatus to have a relatively short overall height, whereby it can be used in an industrial unit even one having a low ceiling. Furthermore, the apparatus affords generally easier access and interchangeability of various components for quick and easy powder colour change.

The base of the cyclone body is disengageably clamped to the intermediary powder storage chamber, whereby a replacement chamber may be used such that the same cyclone body can be used with a different coloured powder. Alternatively the same chamber may be removed, cleaned and then re-used with a different coloured powder.

The powder sieve device preferably comprises a powder separating appliance (suitably a 'second' smaller cyclone body) arranged above a sieve chamber having a sieve member therein in order to separate out the powder from the carrying medium used to transport the powder from the intermediary storage chamber of the powder sieve device.

The apparatus is preferably provided with a reusable powder storage reservoir beneath the sieve device. This reservoir may be a fluidized feeder hopper to which powder guns are supplied powder by a suitable pump. The apparatus thus acts both as a powder recovery and powder recycling arrangement.

The powder sieve device is suitably offset from the vertical or longitudinal axis of the cyclone body. The vertical or longitudinal axis of the sieve device may be parallel to and at a predetermined distance away from the vertical or longitudinal axis of the cyclone body so as to reduce the overall height of the powder recovery apparatus to a minimum.

Suitably, the powder sieve device may be positioned either closely adjacent or remotely to the side of the cyclone body.

Powder sieve devices which are positioned remotely to the side of the cyclone body can thus be located closely adjacent the powder gun(s) of a spray booth, and is also readily adaptable to serve more than one cyclone body.

When the powder sieve device is closely adjacent the cyclone body, the powder sieve device and/or intermediary storage chamber and/or reusable storage reservoir and/or transfer pump may be arranged as an integral unit or module which is preferably supported on a wheeled mounting movable with respect to the main cyclone body.

The invention will now be described, by way of example, with reference to the accompanying drawings, in which;

Figure 1 is a side schematic view of a system including one embodiment of powder recovery apparatus in accordance with the invention,

Figure 2 is a side schematic view of a system including another embodiment of powder recovery apparatus in accordance with the invention,

Figure 3 is a side view of a further embodiment of powder recovery apparatus in accordance with the invention,

Figure 4 is a side view of a yet further embodiment of powder recovery apparatus in accordance with the invention, and

Figure 5 is a front view of the apparatus of Figure 4.

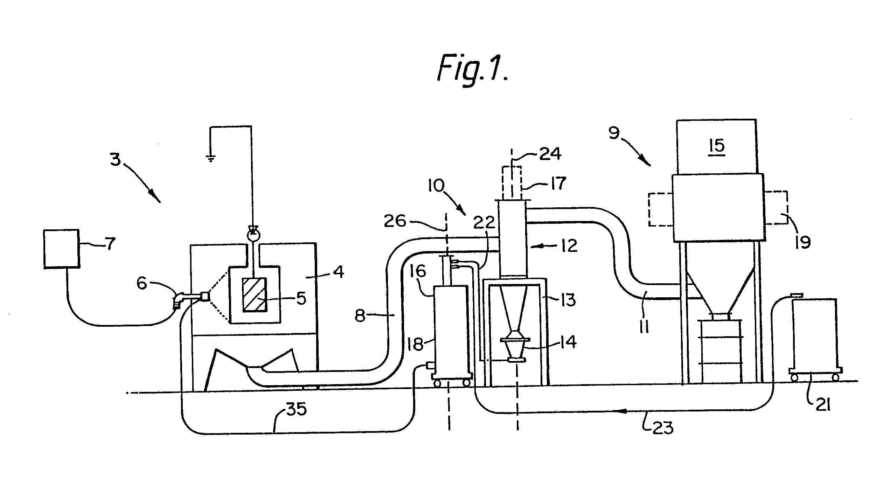

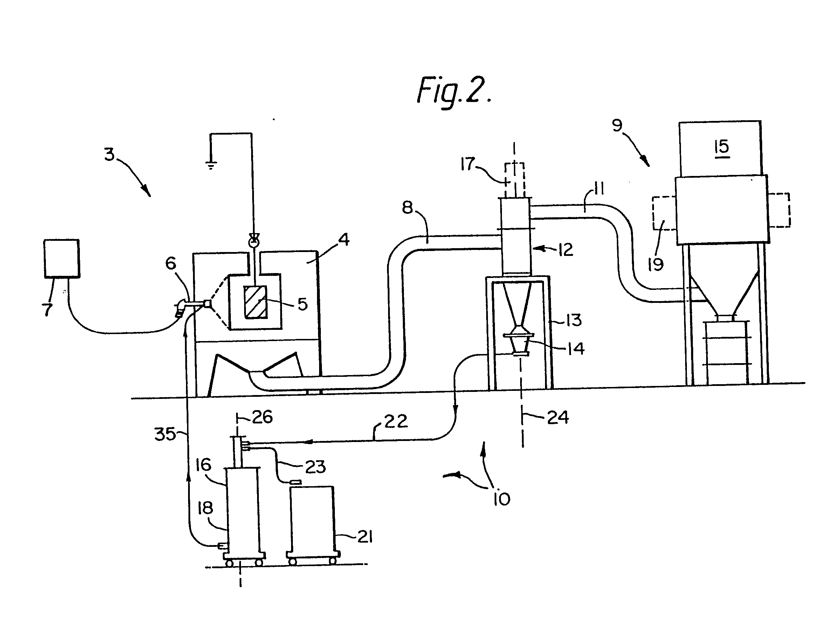

The arrangements shown in Figures 1 and 2 both basically comprise a spraying system 3, a powder recovery and recycling apparatus 10 and a collector system 9.

The spraying system 3 comprises a spray booth 4 in which a grounded work piece 5 is powder coated by a gun 6 operated by a high voltage powder pack 7.

The powder recovery and recycling apparatus 10 basically comprises a cyclone body 12 supported on the ground by supports 13, an intermediary powder storage chamber 14 detachably connected with the body 12, a powder sieve device 16 and a reusable powder storage reservoir 18.

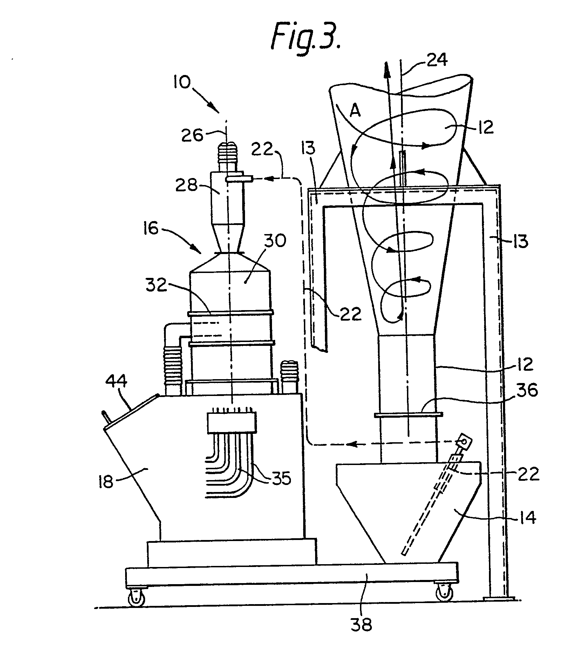

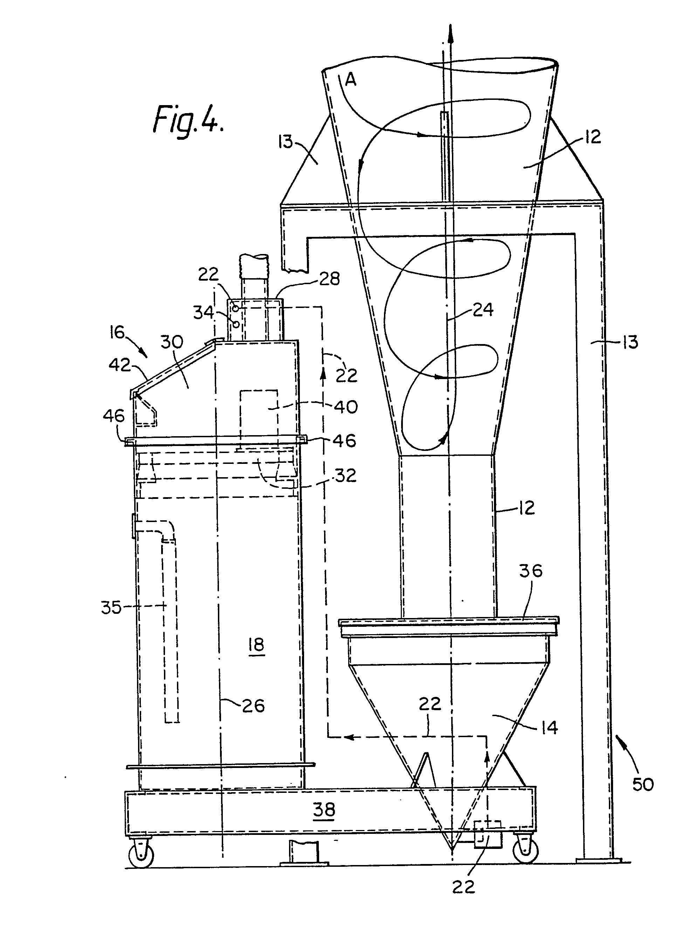

In operation, transporting air laden with powder particles and exhausted from the coating operation in the spray booth 4, is introduced via the duct/pipeline 8 horizontally into the top of the cyclone body 12, which due to the air flow (see arrow A in Figures 3 and 4) in the body 12 causes the powder to be separated out from its suspended form and be deposited into the intermediary storage chamber 14 (in particular a surge hopper) which is positioned directly underneath the body 12. Thereafter, the separated powder is elevated and transferred by a pump and transfer hose 22 to the powder sieve device 16 which is positioned off to the side of the cyclone body 12. Specifically, the sieve device 16 is offset from the vertical or longitudinal axis 24 of the cyclone body, and more specifically, the vertical/longitudinal axis 26 of the sieve device 16 is parallel to and at a predetermined distance away from the axis vertical/longitudinal 24 of the cyclone body 12.

The reservoir 18 which is beneath the seive device 16 is used to supply powder on demand to the powder gun 6 via the gun supply pipe 35.

Since the reservoir 18 may act initially as the virgin powder feeder hopper for a bank of spray guns in a spray booth, the arrangement acts as a circuit in which oversprayed powder may be repeatably recovered and recycled until exhausted. Such a closed loop arrangement reduces risk of contamination and minimises labour requirements by eliminating the operation of manually transferring the powder.

In the arrangement shown in Figure 1, the powder sieve device 16 is positioned closely adjacent the side of the cyclone body 12, while in the arrangement shown in Figure 2, the powder sieve device 16 is positioned remotely to the side of the cyclone body 12.

In both the arrangements shown in Figures 1 and 2, the air which enters the cyclone body 12 via duct/pipeline 8, exits the cyclone body 12 at the top thereof via the duct/pipeline 11, and is transported to the collector system 9 comprising an after filter 15. Both the cyclone body 12 and the filter 15 are provided with explosion vents 17 and 19 respectively for safety.

The arrangements shown in Figures 1 and 2 are also shown having a container 21 of virgin powder whereby such powder may be pumped (see 23) and introduced into the sieve device 16 in order to "make-up" for any powder not recycled.

In the arrangements shown in Figures 3 to 5, two embodiments of powder recovery and recycling apparatus 10 are disclosed in detail.

The apparatus 10 shown in Figure 3 has the powder sieve device 16 comprising a powder separating appliance in the form of a second smaller cyclone body 28 on top of a sieve chamber 30 having a sieve member 32 therein for example a 100 to 400 micron mesh. Powder introduced horizontally into the top of the 'mini' cyclone body 28 by the pump and transfer hose 22 is then separated out from the carrying medium used to transfer it from the chamber 14, wherein subsequently oversized powder particles and/or contaminants are automatically separated out by the sieve member 32. Correctly sized powder is then discharged to the reusable powder storage reservoir 18 in the form of a fluidized feeder hopper.

The intermediary chamber 14 is disengageably connected to the cyclone body 12 by means of a clamp 36. An integral unit or module comprising the chamber 14, sieve device 16, pump and transfer hose 22 and reservoir 18 are all mounted on a wheeled support 38, such that when the chamber 14 is disconnected from the body 12, the wheeled support 38 together with the integral unit mounted thereon can be removed, and a replacement wheeled support 38 and integral unit connected to the body 12. Such an arrangement means that the same cyclone body 12 may be used even after the colour change of powder.

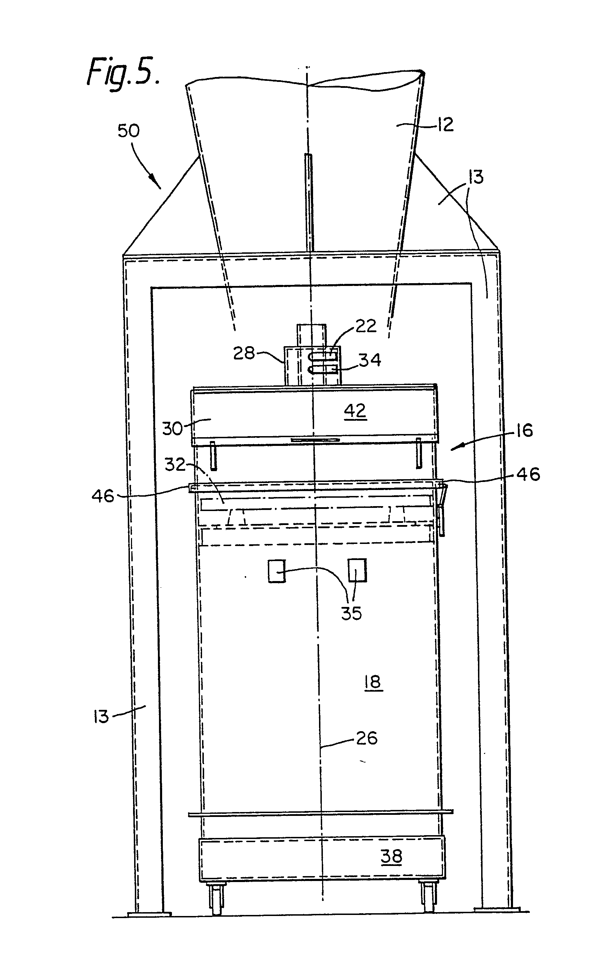

In Figures 4 and 5, the sieve member 32 of the powder recovery apparatus 50 is shown in greater detail. A pnuematic vibrator 40 is shown mounted on the sieve member 32 such that any correctly sized powder deposited on the member 32 is vibrated therethrough, leaving any oversized powder and/or contaminants thereon. Virgin powder may also be introduced onto the sieve member 32 either through the lid 42 provided on the sieve chamber 30 and/or by being pumped from a remote container (not shown) into the second inlet 34 of the 'mini' cyclone body 28, such that even oversized powder and/or contaminants in the virgin powder are removed prior to spraying by the spray guns.

The upper half of the sieve chamber 30 is disengageable from the lower half of the chamber, approximately at the point (see 46) where the sieve member 32 is supported, such that access can be made to clean the sieve member 32 from oversized powder and contaminants.

In the powder recovery apparatus 10 of Figure 3, virgin powder is supplied to the reservoir 18 directly through the lid 44.

The powder recovery apparatus 10 and 50 are capable of supplying, recovering and recycling sufficient powder for example ten spray guns operating on maximum flow.

**Claims**

1. A coating powder recovery apparatus comprising a cyclone body to separate coating particles from a suspended form, an intermediary powder storage chamber positioned beneath the cyclone body and a coating powder sieve device to separate out re-usable coating powder, the sieve device being positioned to the side of the cyclone body and a transfer hose to feed the powder from the intermediary chamber to the powder sieve device characterised in that the intermediary powder storage chamber (14) is detachably secured to the cyclone body (12).

2. A coating powder recovery apparatus as claimed in Claim 1 wherein coating powder is fed from the intermediary chamber (14) and elevated to the sieve device (16) by means of a transfer pump (22).

3. An apparatus as claimed in either Claim 1 or 2 wherein the sieve device comprises a coating powder separating appliance (28) above a sieve chamber (30) having a sieve member (32) therein.

4. An apparatus as claimed in Claim 3 where the separating appliance is a 'second' smaller cyclone body (28).

5. An apparatus as claimed in any preceding Claim including a re-usable coating powder storage reservoir (18) positioned beneath the sieve device (16).

6. An apparatus as claimed in Claim 5 wherein the storage reservoir (18) is a fluidized feeder hopper from which coating powder guns (6) are supplied coating powder by a pump.

7. An apparatus as claimed in any preceding Claim wherein the vertical or longitudinal axis (24) of the sieve device (12) is parallel to and at a predermined distance away from the vertical or longitudinal axis (26) of the cyclone body (16).

8. An apparatus as claimed in any preceding Claim wherein the sieve device (16) is positioned closely adjacent the cyclone body (12).

9. An apparatus as claimed in Claim 8 wherein the sieve device (16) and/or intermediary storage chamber (14) and/or reusable storage reservoir (18) and/or transfer pump (22) are arranged as an integral unit or module.

10. An apparatus as claimed in Claim 9 wherein the integral unit or module is supported on a wheeled mounting (38) movable with respect to the main cyclone body (12).

11. An apparatus as claimed in any one of Claims 1 to 7 wherein the sieve device (16) is positioned remotely from the cyclone body (12).

12. An apparatus as claimed in any preceding Claim wherein the cyclone body (12) is supported directly on a floor by a plurality of legs (13) connected to the cyclone body.

## Patentansprüche

1. Rückgewinnungsanlage für Beschichtungspulver, bestehend aus einem Zyklonkörper zur Abscheidung von Beschichtungsteilchen aus der Schwebeform, einer unter dem Zyklonkörper eingeordneten Pulverzwischenlagerungskammer und einer Beschichtungspulversiebvorrichtung zur Abtrennung wiederverwendbaren Beschichtungspulvers, wobei die Siebvorrichtung zur Seite des Zyklonkörpers angeordnet ist, sowie einem Förderschlauch zur Förderung des Pulvers von der Zwischenkammer zu der Pulversiebvorrichtung, dadurch gekennzeichnet, daß die Pulverzwischenlagerungskammer ( 14) lösbar am Zyklonkörper (12) befestigt ist.

2. Rückgewinnungsanlage für Beschichtungspulver nach Anspruch 1, worin Beschichtungspulver mittels einer Förderpumpe (22) von der Zwischenkammer (14) zugeführt und zu der Siebvorrichtung (16) angehoben wird.

3. Anlage nach Anspruch 1 oder 2, worin die Siebvorrichtung aus einem Beschichtungspulvertrenngerät (28) über einer Siebkammer (30) mit einem Sieborgan (32) darin besteht.

4. Anlage nach Anspruch 3, worin das Trenngerät ein 'zweiter' kleinerer Zyklonkörper (28) ist.

5. Anlage nach einem der vorherigen Ansprüche, mit einem unter der Siebvorrichtung (16) angeordreten Vorratsbehälter (18) für wiederverwendbares Beschichtungspulver.

6. Anlage nach Anspruch 5, worin der Vorratshälter (18) ein Wirbelschichtzuführtrichter ist, aus dem Beschichtungspulverpistolen (6) mittels einer Pumpe mit Beschichtungspulver versorgt werden.

7. Anlage nach einem der vorherigen Ansprüche, worin die senkrechte bzw. Längsachse (24) der Siebvorrichtung (12) der senkrechten bzw. Längsachse (26) des Zyklonkörpers (16) parallel ist und sich im vorbestimmten Abstand von dieser befindet.

8. Anlage nach einem der vorherigen Ansprüche, worin die Siebvorrichtung (16) direkt neben dem Zyklonkörper (12) angeordnet ist.

9. Anlage nach Anspruch 8, worin die Siebvorrichtung (16) und/oder die Zwischenlagerungskammer (14) und/oder der Vorratsbehälter (18) für wiederwerwendbares Pulver und/oder die Förderpumpe (22) als integrierte Einheit oder Baugruppe ausgeführt sind.

10. Anlage nach Anspruch 9, worin die integrierte Einheit oder Baugruppe auf einem gegenüber den Hauptzyklonkörper (12) verfahrbaren Gestell (38) mit Rädern stehen.

11. Anlage nach einem der Ansprüche 1 bis 7, worin die Siebvorrichtung (16) von dem Zyklonkörper (12) entfernt angeordnet ist.

12. Anlage nach einem der vorherigen Ansprüche, worin der Zyklonkörper (12) mittels mehreren, mit dem Zyklonkörper verbundenen Stützen (13) direkt auf dem Boden steht.

## Revendications

1. Un appareil de récupération de poudre de revêtement comportant un corps de cyclone pour séparer les particules de revêtement à partir d'une forme en suspension, une chambre de stockage de poudre intermédiaire disposée sous le corps de cyclone et un dispositif de tamisage de poudre de revêtement pour séparer la poudre de revêtement réutilisable, le dispositif de tamisage étant disposé sur le côté du corps de cyclone et un tuyau souple de transfert pour fournir la poudre, à partir de la chambre intermédiaire, au dispositif de tamisage de poudre, caractérisé en ce que la chambre de stockage de poudre intermédiaire (14) est fixée, de manière à pouvoir être détachée, au corps de cyclone (12).

2. Un appareil de récupération de poudre de revêtement selon la revendication 1, dans lequel la poudre de revêtement est fourniee à partir de la chambre intermédiaire (14) et soulevée vers le dispositif de tamisage (16) au moyen d'une pompe de transfert (22).

3. Un appareil selon d'une quelconque des revendications 1 ou 2 dans lequel le dispositif de tamisage comporte un appareil de séparation de poudre de revêtement (28) au-dessus d'une chambre de tamisage (30) ayant à l'intérieur un élément de tamisage (32).

4. Un appareil selon la revendication 3 dans lequel l'appareil de réparation est un second corps de cyclone plus petit (28).

5. Un appareil selon l'une quelconque des revendications précédentes comportant un réservoir de stockage de poudre de revêtement réutilisable (18) disposé au-dessous du dispositif de tamisage (16).

6. Un appareil selon la revendication 5, dans lequel le réservoir de stockage (18) est une trémie d'alimentation à lit mobile à partir de laquelle les pistolets de poudre de revêtement (6) sont alimentés en poudre de revêtement par une pompe.

7. Un appareil selon l'une quelconque des revendications précédentes dans lequel l'axe vertical ou longitudinal (24) du dispositif de tamisage (12) est parallèle à et à une distance prédéterminée de l'axe vertical ou longitudinal (26) du corps de cyclone (16).

8. Un appareil selon l'une quelconque des revendications précédentes dans lequel le dispositif de tamisage (16) est disposé très près du corps de cyclone (12).

9. Un appareil selon la revendication 8 dans lequel le dispositif de tamisage (16) et/ou la chambre de stockage intermédiaire (14) et/ou le réservoir de stockage réutilisable (18) et/ou la pompe de transfert (22) sont montés comme un bloc ou module intégral.

10. Un appareil selon la revendication 9 dans lequel le bloc ou module intégral est monté sur un support à roulettes (38) pouvant se déplacer par rapport a corps de cyclone principal (12).

11. Un appareil selon l'une quelconque des revendications 1 à 7 dans lequel le dispositif de tamisage (16) est monté éloigné du corps de cyclone (12).

12. Un appareil selon l'une quelconque des revendications précédentes dans lequel le corps de cyclone (12) est directement monté sur un plancher par l'intermédiaire d'une pluralité de montants (13) reliés au corps de cyclone.

Fig.1.

Fig.2.

EP 0 165 815 B1

# Fig.3.

*Fig.4.*

A

13

12

22

28

34

16

30

42

46

22

40

46

32

24

13

36

35

18

26

12

22

14

38

22

50

4

Fig.5.